Europäisches Patentamt

European Patent Office

Office européen des brevets

(19)

(11) Numéro de publication: **0 028 552**

**A1**

(12) # DEMANDE DE BREVET EUROPEEN

(21) Numéro de dépôt: **80401459.5**

(22) Date de dépôt: **10.10.80**

(51) Int. Cl.³: **B 64 C 25/46**
**B 60 T 8/02**

(30) Priorité: **16.10.79 FR 7925678**

(43) Date de publication de la demande:
**13.05.81 Bulletin 81/19**

(84) Etats Contractants Désignés:
**DE GB IT SE**

(71) Demandeur: **MESSIER-HISPANO-BUGATTI (S.A)**
**5, rue Louis Lejeune**
**F-92120 Montrouge(FR)**

(72) Inventeur: **Masclet, Jean**
**11 Boulevard Davout**
**F-75020 Paris(FR)**

(72) Inventeur: **Marcheron, Claude**
**24 rue Paul Bert**
**F-92120 Montrouge(FR)**

(72) Inventeur: **Guichard, Jean**
**15 rue Louis Blanc**
**F-92250 La Garenne-Colombes(FR)**

(74) Mandataire: **Flavenot, Bernard**
**Société S.E.D.I.C. 40 rue Victor Basch**
**F-92120 Montrouge(FR)**

(54) **Perfectionnements aux installations de régulation de freinage pour véhicules, notamment pour aérodynes.**

(57) L'installation de régulation de freinage comporte des moyens (1), délivrant des signaux de vitesse réelle du véhicule, un générateur d'impulsions (2), délivrant des signaux de vitesse de roue freinée, un calculateur numérique (10), mesurant la vitesse de la roue freinée par comptages relatifs du nombre d'impulsions et d'unités de temps, et élaborant un signal de vitesse de consigne, obtenu à partir d'un glissement de consigne, et sur laquelle la vitesse de la roue freinée est asservie, pour piloter un organe de commande de freinage (6), tel qu'une électrovalve rapide en "tout ou rien".

FIG.1

EP 0 028 552 A1

## PERFECTIONNEMENTS AUX INSTALLATIONS DE REGULATION DE FREINAGE POUR VEHICULES, NOTAMMENT POUR AERODYNES

1

L'invention concerne des perfectionnements apportés aux installations de régulation de freinage pour véhicules appelés à rouler sur le sol, en particulier pour des aérodynes munis d'une installation de freinage à commande hydraulique. .

Il est déjà connu des brevets français n° 1.378.958, n° 1.407..168 et du premier additif à ce dernier, n° 86.491, des installations de régulation de freinage à commande hydraulique, notamment pour trains d'atterrissage d'aérodynes, permettant d'asservir le glissement d'une roue freinée à une valeur déterminée par rapport à la vitesse qu'elle aurait eue en l'absence de freinage, c'est-à-dire en fait par rapport à la vitesse du véhicule support.

La chaîne de régulation de ces installations comprend des moyens délivrant des signaux représentatifs de la vitesse réelle du véhicule, par recopie de la vitesse d'une roue non freinée, ou par intégration de signaux analogiques représentatifs de l'accélération du véhicule, décelée par un accéléromètre, par exemple à inertie, monté sur le véhicule et agencé de façon à mesurer ses accélérations longitudinales, ainsi qu'un capteur délivrant des signaux représentatifs de la vitesse d'une roue freinée, en l'occurrence une génératrice tachymétrique à courant continu, délivrant une tension électrique analogique proportionnelle à la vitesse de rotation, un calculateur analogique permettant de comparer la vitesse de la roue freinée

2

à celle du véhicule, de calculer un glissement de consigne comme étant le glissement adéquat à réaliser, d'élaborer, en conséquence, un signal représentatif d'une vitesse de consigne, sur laquelle la vitesse de la roue freinée doit être asservie par l'installation, de comparer les signaux de vitesse de la roue freinée et de la vitesse de consigne pour élaborer un ordre de pilotage d'un organe de commande de freinage, en général une interface électro-hydraulique, susceptible d'actionner les freins du véhicule proportionnellement au couple de freinage. L'interface électro-hydraulique est le plus souvent une servo-valve asservie en pression, délivrant, dans la conduite d'utilisation qui la relie aux freins, une pression qui est proportionnelle au courant électrique de commande provenant du calculateur analogique. Tous les appareils que comprennent de telles installations de régulation sont essentiellement analogiques, leur fonction de sortie étant continue et proportionnelle à leur fonction d'entrée.

Les récentes évolutions de la technologie dans le domaine de l'électronique permettent maintenant la réalisation de calculateurs numériques remplissant les mêmes fonctions que celles dévolues aux calculateurs analogiques, classiquement utilisés dans les installations de régulation de freinage connues.

De plus, on sait également réaliser des électrovalves hydrauliques rapides, susceptibles d'être pilotées par un calculateur numérique, et de répondre convenablement à une excitation de commande d'une fréquence notablement supérieure à 50 Hz, voire même

3

à 100 Hz, en faisant varier leur temps d'ouverture par rapport au temps de fermeture, pour moduler en "tout ou rien" la pression dans un circuit hydraulique situé en aval de l'électrovalve rapide.

Il est apparu intéressant de profiter des nouvelles possibilités ainsi offertes pour concevoir des installations de régulation de freinage entièrement numériques, sans se contenter de la solution intermédiaire qui consisterait à remplacer le calculateur électronique analogique des installations connues par un calculateur numérique assurant la même fonction, mais avec l'adjonction, à l'entrée et à la sortie du calculateur, de convertisseurs de signaux analogiques en signaux numériques.

Dans le cas particulier d'une installation dans laquelle la commande du freinage est hydraulique, on se propose, de plus, selon l'invention, d'obtenir au moyen d'une installation entièrement numérique, un pilotage en pression très proche de celui obtenu au moyen d'installations analogiques, grâce à l'affaiblissement de la réponse hydraulique d'une électrovalve rapide par rapport à sa commande électrique, à partir d'une certaine fréquence d'excitation, en augmentant ou en abaissant le niveau de pression selon que l'on privilégie le temps d'ouverture par rapport au temps de fermeture ou inversement.

A cet effet, une installation de régulation selon l'invention se caractérise en ce que le capteur délivrant des signaux représentatifs de la vitesse d'une roue freinée est un générateur d'impulsions, lesquelles sont transmises au calculateur, de type

0028552

4

numérique, mesurant la vitesse de la roue freinée
par comptage relatif du nombre d'impulsions et du
nombre d'unités de temps déterminées par une horloge,
et pilotant l'organe de commande de freinage en
"tout ou rien", selon une fonction de transfert directe telle que la position de repos de l'organe de
commande est de ne pas envoyer d'ordre de défreinage
lorsque la vitesse de la roue freinée est supérieure
à la vitesse de consigne, et que la position active
de l'organe de commande est d'envoyer un ordre de
défreinage lorsque la vitesse de la roue freinée est
inférieure à la vitesse de consigne.

Le calculateur peut prendre en compte la vitesse, soit
par comptage du nombre d'impulsions par unité de
temps, soit par comptage du nombre d'unités de temps
entre deux impulsions, l'unité de temps étant choisie
suffisamment courte pour qu'à la vitesse de rotation
maximale de roues il y ait toujours plusieurs unités
de temps entre deux impulsions. De plus, le calculateur pilote l'organe de commande de freinage par une
suite de cycles se succédant à une cadence prédéterminée, et, à chaque début de cycle, un ordre de défreinage est créé, dont la durée est nulle si un défreinage n'est pas nécessaire, et dont la durée est
celle d'un cycle si un défreinage total est nécessaire.

Dans une autre réalisation, pour laquelle chaque cycle de la suite sera plus long que les cycles évoqués
ci-dessus, chaque cycle est partagé en plusieurs
parties égales, la durée de l'ordre de défreinage
créé au début du cycle étant celle d'une fraction de
cycle, correspondant à un nombre entier, déterminé

5

par le calculateur, de parties de cycle, si un défreinage partiel est nécessaire, ·la durée de l'ordre
de défreinage étant, comme précédemment, nulle ou
égale à celle du cycle si respectivement un défreinage n'est pas ou est nécessaire.

De préférence, l'anticipation du pilotage de l'organe
de commande de freinage, compensant les retards de
réponse de ce dernier et des freins notamment, est
réalisée en ajoutant à la fonction de transfert directe, une fonction pondérée proportionnelle à l'accélération de la roue freinée, ainsi, éventuellement,
qu'une fonction pondérée proportionnelle à la dérivée
seconde de la vitesse de la roue freinée en fonction
du temps.

Afin d'éviter les variations trop brutales du couple
de freinage, en particulier les augmentations de couple, il peut s'avérer nécessaire d'ajouter également
à la fonction directe une fonction pondérée limitant
le nombre de cycles successifs se déroulant sans ordre de défreinage, compte tenu des ordres antérieurs.

Dans un grand nombre d'installations connues de régulation de freinage, l'organe de commande du freinage est une interface électro-hydraulique, qui délivre aux freins à commande hydraulique une pression
d'actionnement proportionnelle au couple de freinage.

Dans les installations de ce type, la variation de
pression dans les freins suppose la variation de volume d'huile dans les cyclindres hydrauliques des
freins, ce qui est habituellement obtenu au moyen
d'une servo-valve asservie en pression, qui régule
la quantité d'huile envoyée aux freins de manière à
ce que la pression finale d'actionnement des freins

6

corresponde au courant électrique en provenance du calculateur et alimentant l'étage électrique de la servo-valve, la valeur de ce courant électrique étant, dans les installations antérieures connues, généralement réglée de façon analogique, c'est-à-dire que le courant peut prendre toutes les valeurs entre zéro et le maximum.

L'utilisation d'une telle servo-valve asservie en pression, dans une installation selon l'invention, est tout à fait possible, mais elle se présente toutefois comme une interface électro-hydraulique d'une inutile complexité.

Une servo-valve asservie en débit, dont la structure est un peu plus simple que celle du type précédent, est également utilisable, sa caractéristique de progressivité n'étant pas forcément utilisée, mais les performances requises restent assurées.

Dans une forme préférée de réalisation de l'installation selon l'invention, l'organe de commande de freinage est une électrovalve rapide délivrant aux freins à commande hydraulique une pression d'actionnement proportionnelle au couple de freinage, et commandée en "tout ou rien" par l'électrovalve rapide, elle-même pilotée électriquement en "tout ou rien" par le calculateur.

L'invention sera mieux comprise à l'aide de l'exemple particulier de réalisation, qui sera à présent décrit, à titre non limitatif, en référence aux figures annexées dans lesquelles :

- la figure 1 représente une vue schématique d'une installations de régulation de freinage à commande hydraulique pour train d'atterrissage d'aérodyne.

7

- la figure 2 représente l'évolution en parallèle de l'ordre électrique de pilotage de l'organe de commande de freinage, en l'occurrence une électrovalve rapide, et de la pression hydraulique dans les freins, en fonction du temps, dans une installation selon la figure 1 et selon un premier mode d'obtention de cet ordre électrique de pilotage.

- et la figure 3 représente, de façon analogue, l'évolution des mêmes paramètres selon un second mode d'obtention de l'ordre électrique de pilotage.

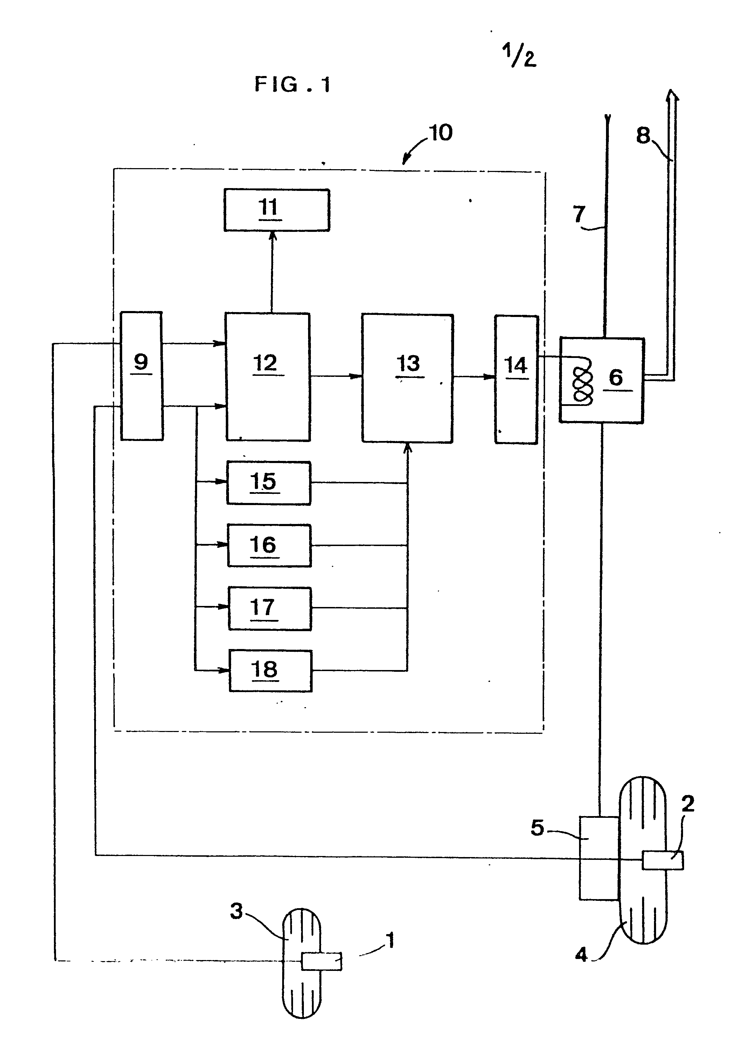

En référence à la figure 1, l'installation de régulation de freinage comprend des capteurs 1 et 2, montés respectivement sur l'atterrisseur avant et sur l'un des atterrisseurs principaux d'un aérodyne, et constitués sous la forme de générateurs de signaux alternatifs, pouvant être de forme sinusoïdale, trapézoïdale, rectangulaire ou triangulaire, et désignés ci-après comme étant des impulsions, représentatives respectivement de la vitesse de la roue 3 ou de l'une des roues avant, non freinée, de l'aérodyne, et de la vitesse de la roue 4 ou de l'une des roues de l'atterrisseur principal, susceptible d'être freinée grâce aux freins 5 à commande hydraulique, mis sous pression par l'intermédiaire d'une électrovalve rapide 6 reliée à un circuit hydraulique embarqué sur l'aérodyne par la conduite d'alimentation 7, et la conduite de retour 8 reliée à une bâche ou réservoir du circuit hydraulique.

Le nombre des impulsions émises par les capteurs 1 ou 2, par tour de roue 3 ou 4, peut être quelconque, mais dans l'application à l'équipement des aérodynes

0028552

8

qui nous intéresse, ce nombre est avantageusement de l'ordre de 50 impulsions par mètre de circonférence des roues 3 et 4, soit environ 200 par révolution pour une roue d'avion civil. La valeur crête à crête des impulsions n'a pas d'influence directe sur le fonctionnement de l'installation, mais elle doit cependant être compatible avec les possibilités de traitements des circuits électroniques décrits ci-après. La technologie des capteurs 1 et 2 est indifférente, mais, de préférence, les impulsions sont émises sous la forme de signaux électriques, les capteurs 1 et 2 étant par exemple des capteurs à induction ou à aimant permanent d'un type bien connu en soit.

On peut également utiliser des capteurs optiques transformant des impulsions lumineuses en signaux électriques, soit au niveau du capteur lui-même, soit transportées par fibres optiques, jusqu'à une interface appropriée à l'entrée du régulateur décrit ci-après.

Les capteurs 1 et 2 sont, dans tous les cas, reliés à l'interface d'entrée 9 d'un calculateur numérique 10, assurant la mesure de vitesse de la roue freinée $V_R$ et de la vitesse réelle de l'aérodyne $V_A$ assimilée à la vitesse de roue non freinée 3, la détermination du glissement de consigne $G_C$ d'une façon correspondant à celle considérée dans les brevets antérieurs cités ci-dessus, et la détermination de la vitesse de consigne $V_C$ sur laquelle est asservie la vitesse de la roue freinée $V_R$, puis la commande en puissance de l'électrovalve 6. L'interface d'entrée 9 assure la transformation des signaux émis par les

9

capteurs 1 et 2 en valeurs numériques de calcul exploitables par le calculateur numérique 10. Ce dernier peut calculer les vitesses du véhicule $V_A$ et de la roue freinée $V_R$ de deux manières distinctes. Soit l'horloge 11, intégrée au calculateur 10, définit une unité de temps $T_1$, dont la durée est choisie pour que la fonction vitesse de roue soit suffisamment représentative, et le calculateur 10 compte pour chacune des roues 3 et 4 le nombre x d'impulsions reçues par unité de temps $T_1$, de sorte que la vitesse des roues 3 et 4 est représentée par une fonction : $V = \dfrac{K_1 \cdot x}{T_1}$, où $K_1$ est un coefficient.

Soit, l'horloge 11 définit une unité de temps $T_2$, suffisamment courte de façon qu'à la vitesse de rotation maximale prévisible des roues 3 et 4, il s'écoule toujours plusieurs unités de temps $T_2$ entre deux impulsions, et le calculateur 10 compte le nombre y d'unités de temps $T_2$ entre deux impulsions, de sorte que la vitesse des roues est représentée par une fonction : $V = \dfrac{K_2}{y \cdot T_2}$, où $K_2$ est un coefficient.

La vitesse de la roue freinée $V_R$ et la vitesse de l'aérodyne $V_A$ ayant été, toutes deux, calculées par l'une de ces deux méthodes, le calculateur 10 détermine ensuite la vitesse de consigne $V_C$ telle que $V_C = V_A \cdot G_C$, où le glissement de consigne $G_C$ peut être un coefficient fixe, déterminée expérimentalement. La comparaison entre la vitesse de consigne $V_C$ et la vitesse de la roue freinée $V_R$ est ensuite effectuée dans le bloc comparateur 12, qui élabore un signal d'erreur $\mathcal{E}$, communiqué au sommateur 13, lui-même relié à l'interface de sortie ou de commande 14, assurant la transformation des ordres numériques reçus du sommateur 13 en ordres électriques envoyés sur l'étage de pilotage de l'électrovalve rapide 6. Celle-ci est pilotée en "tout ou rien", de sorte que la quantité d'huile hydraulique retirée ou ajoutée au circuit de freinage est proportionnelle respectivement au temps d'ouverture ou au temps de fermeture de l'électrovalve 6.

Par la commande numérique du freinage, c'est-à-dire par une commande en "tout ou rien", la pression n'est jamais constante, mais évolue autour d'une valeur moyenne en une succession d'augmentations et de diminutions de sa valeur. La pente de ces variations de pression est une fonction directe du débit de l'électrovalve de régulation, et inverse de l'impédance hydraulique du frein à commander. Pour une combinaison donnée d'électrovalve et de frein, les pentes de montées et de baisses de pression sont connues, et la variation crête-à-crête de la pression dépendra essentiellement de la fréquence de commande.

En fait, si l'on compare les variations de pression, obtenues avec l'asservissement numérique ci-dessus décrit, à celles obtenues avec un asservissement analogique de l'état de la technique, on s'aperçoit dans la pratique, que le fonctionnement est à peu près identique. Dans l'asservissement analogique, en effet, les conditions de freinage varient d'un instant à l'autre, soit du fait de parasites sur la ligne de mesure de la vitesse de la roue freinée (bruit de génératrice tachymétrique), ou de variations brutales de vitesse, dues à des accidents locaux du contact entre le pneumatique de la roue freinée et la piste, etc. Les variations rapides et successives des con-

11

ditions de freinage, amplifiées par la chaîne de régulation, font que la pression, qui, théoriquement, pourrait être constante, ou faiblement variable, est en fait une succession de montées et de baisses de pression, avec des variations de niveaux plus ou moins importantes, autour d'une valeur moyenne.

Le fonctionnement de l'asservissement numérique proposé est donc très semblable à celui des asservissements analogiques connus. Il présente, en plus, l'avantage que la fréquence des variations de pression n'est plus aléatoire, mais déterminée, et que l'on peut la choisir en fonction de certains critères, en particulier telle qu'elle n'ait aucune influence sur les vibrations propres de la jambe d'atterrisseur de l'aérodyne.

Dans le cas de la commande des freins d'un gros avion civil, une variation de la pression, en cours d'asservissement, de l'ordre de 10% de la pression maximale de freinage admissible, nécessitera une fréquence de commande de l'ordre de 40 à 50 Hz, avec les débits hydrauliques normalement utilisés. Comme il est par ailleurs nécessaire que la fréquence de commande du freinage ne risque pas de se coupler avec la fréquence propre de l'atterrisseur, laquelle varie de 5 à 20 Hz, il est indispensable que la fréquence de commande soit supérieure à 20 Hz.

Le pilotage en "tout ou rien" de l'électrovalve rapide 6 par l'interface de commande 14 du calculateur 10, et donc la commande en "tout ou rien" de la pression dans les freins 5 sont réalisés de l'une des deux façons décrites ci-après.

12

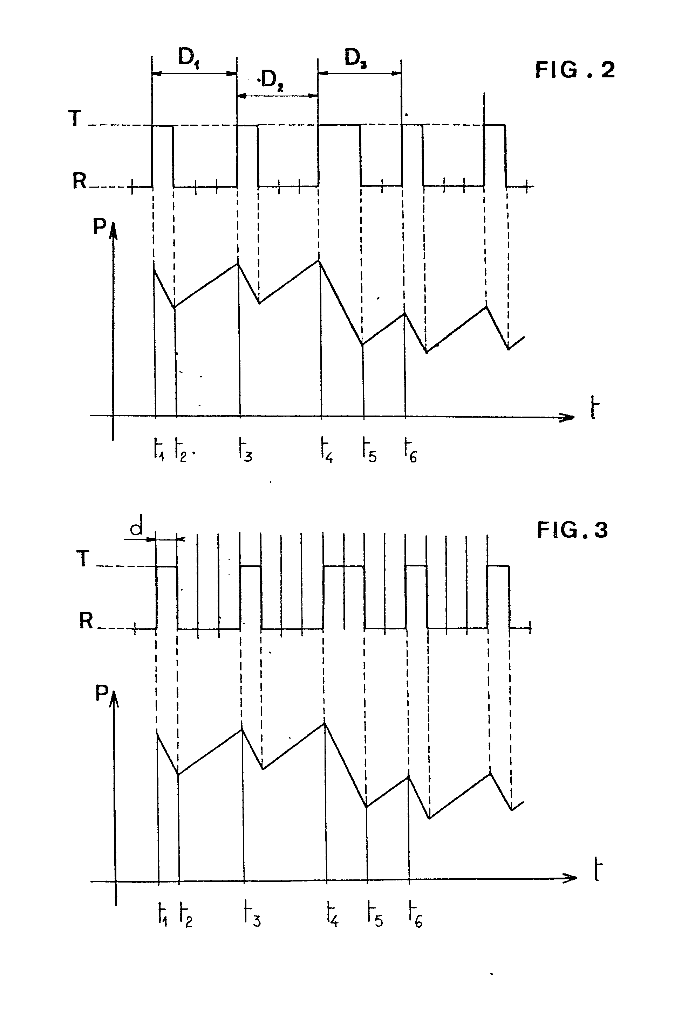

Comme représenté sur la figure 2, l'évolution par augmentation et diminutions successives de la pression P dans le temps est commandée par une suite de cycles qui se succèdent à une fréquence prédéterminée et convenable pour l'application envisagée, soit par exemple 50 Hz. La durée D d'un cycle est donc de 20 ms. La position de repos R de l'interface de commande 14 est de ne pas envoyer d'ordre électrique de défreinage à l'électrovalve 6, tandis que la position de travail T est d'envoyer un ordre électrique de défreinage, sous la forme d'un courant électrique d'intensité convenable parcourant la bobine de l'étage de pilotage de l'électrovalve 6.

Toutes les 20 ms, un ordre de défreinage est créé, mais cet ordre sera de durée nulle si un défreinage n'est pas nécessaire. Si un défreinage total est nécessaire, la durée de cet ordre sera égale à celle d'un cycle, soit 20 ms. Si un défreinage partiel est nécessaire, la durée de cet ordre sera limitée à une portion de la durée d'un cycle, variable entre 0 et 20 ms, et déterminée par le calculateur 10. Cette durée n'est pas continuellement variable, mais elle représente une fraction entière de la durée totale du cycle, lequel est partagé en plusieurs parties égales, par exemple quatre parties de 5 ms. Ainsi, durant le premier cycle D1 d'une séquence considérée sur la figure 2, un ordre de défreinage partiel d'un quart de cycle commande une chute de pression entre les instants t1 et t2, suivie d'une augmentation de pression durant les trois quarts restants du cycle, entre les instants t2 et t3, ce dernier instant correspondant au début du cycle suivant D2, identique au

13

premier, tandis qu'au troisième cycle D3, un ordre
de défreinage partiel dont la durée est d'un demi-
cycle, commande une chute de pression entre les
instants t4 et t5, suivie d'une augmentation durant
la seconde moitié du cycle, de t5 à t6.

Sur la figure 3, l'évolution par variations successives de la pression P en fonction du temps est
commandée également par une suite de cycles se succédant à une fréquence prédéterminée, supérieure à
celle choisie sur la figure 2. Par contre, chaque
cycle est complètement effectué en défreinage total
ou en freinage total, les positions de repos R et
de travail T de l'interface de commande 14 étant les
mêmes que prédédemment. Le résultat sera identique
au précédent si la fréquence support dans cet exemple
est de 200 Hz, pour des conditions de freinage identiques. Un ordre de défreinage au premier cycle d,
de durée égale à 5 ms et commandant une chute de pression, sera suivi de trois ordres de freinage, aux
trois cycles suivants, commandant une augmentation de
la pression, comme cela est respectivement représentée entre les instants t1 et t2, et t2 et t3. Entre
les instants t4 et t5, deux ordres de défreinage
consécutifs durant deux cycles consécutifs, commanderont une autre chute de pression suivie d'une augmentation durant les deux cycles suivants, entre les
instants t5 et t6, en l'absence d'ordre de défreinage.
La durée d'un cycle de variation de pression doit correspondre à la durée d'au moins un, mais de préférence
plusieurs cycles de calcul du calculateur numérique
10, car il est nécessaire de piloter l'électrovalve
6 à une fréquence qu'elle est capable d'accepter.

14

Comme déjà dit, le principe de l'installation de régulation est d'asservir la vitesse de la roue freinée $V_R$ à une vitesse de consigne $V_C$ qui peut être un simple pourcentage de la vitesse de l'aérodyne $V_A$, assimilée à la vitesse de la roue non freinée.

Une première solution est de réaliser en électronique la même fonction de transfert que celle qui est réalisée en électronique analogique.

Une seconde solution, plus souple en ce qui concerne le réglage, est d'utiliser une fonction de transfert directe convenablement amplifiée.

La fonction de transfert directe consiste à ne pas émettre d'ordre de défreinage si la vitesse de la roue freinée est supérieure à la vitesse de consigne, et à émettre un ordre de défreinage dans le cas opposé.

Mais la réponse de l'électrovalve 6 aux ordres de pilotage ainsi que celle des freins 5 à la commande hydraulique présentent des retards qui doivent être compensés par une anticipation des ordres de pilotage.

Cette anticipation sera réalisée en tenant compte de la variation de la vitesse de la roue freinée, donc de son accélération. Lorsque la roue décélère, il est probable qu'il va falloir la défreiner, alors que si elle accélère, il est probable qu'il va falloir freiner à nouveau. Le calculateur 10 élabore donc, dans un bloc 15, une fonction B calculée à partir de l'accélération, avec un niveau d'autant plus élevé que l'accélération sera élevée, et cette fonction B, convenablement pondérée, est ajoutée dans le somma-

15

teur 13 à la fonction directe A, également pondérée, élaborée dans le comparateur 12. En technologie numérique, la dérivée de la vitesse V sera facilement obtenue en effectuant l'opération :

$$\gamma_n = \frac{V_n - V_{n-1}}{t_n - t_{n-1}}$$

où $t_n$ et $t_{n-1}$ sont les instants de la fin des cycles de calcul successifs d'ordre n et n-1, Vn et Vn-1 sont les vitesses à ces instants $t_n$ et $t_{n-1}$ et $\gamma_n$ l'accélération à l'instant tn.

Si la stabilisation par la dérivée ne s'avère pas suffisante, il est aisé d'y ajouter la fonction "dérivée seconde" qui agit de la même manière. Cette fonction C est élaborée dans un bloc 16 du calculateur 10 à partir de la dérivée seconde $\dfrac{d^2 V}{d t^2} = \dfrac{\gamma_n - \gamma_{n-1}}{t_n - t_{n-1}}$

et, après pondération, est ajoutée aux deux premières fonctions dans le sommateur 13.

S'il est nécessaire d'éviter les variations, et en particulier les augmentations trop brutales de pression, une fonction D, élaborée dans le bloc 17, pour limiter le nombre successif des ordres de freinage ou de défreinage, en tenant compte des ordres antérieurs, est ajoutée, après pondération, aux autres fonctions dans le sommateur 13. Une telle fonction D permet, par exemple, de donner systématiquement un ordre de défreinage si un tel ordre n'a pas été donné au cours des dix cycles antérieurs, afin de limiter la pente de la montée en pression dans les freins.

Enfin, on introduira également dans le sommateur 13, une fonction E pondérée, élaborée dans le bloc 18, afin de filtrer les fréquences particulières devant être amorties, de façon à ne pas entrer en résonance avec un phénomène périodique extérieur, tel que la vibration des freins ou la fréquence propre de l'atterrisseur.

La fonction résultante de commande F sera donc la somme des fonctions précédentes :

$$F = K_1A + K_2B + K_3C + K_4D + K_5E$$

et la pression dans les freins résultera du pilotage de l'électrovalve rapide 6 par cette fonction F, au travers de l'interface de commande 14.

Dans le cadre de l'invention, la détermination de la vitesse du véhicule n'est pas limitée à la solution qui consiste à lui assimiler la vitesse d'une roue non freinée, mais il est tout à fait possible de calculer la vitesse du véhicule par tout moyen correspondant, en technologie numérique, aux moyens connus en technologie analogique, par exemple par intégration d'un signal provenant d'un accéléromètre numérique.

Il est bien évident que l'installation de régulation de freinage que l'on vient de décrire en association avec des freins à commande hydraulique, peut être adaptée à des freins commandés par un autre moyen, par exemple par pression de gaz ou par courant électrique, sans sortir du cadre de l'invention.

L'utilisation d'une installation de régulation de freinage selon l'invention, équipée d'une électronique numérique, rend plus facile la mesure des vitesses, au moyen d'un capteur du type générateur d'impulsions, de structure plus simple que celle des capteurs utilisés dans les chaînes de régulation analogique,

17

tels que des génératrices tachymétriques, et donc plus fiable que ces dernières. Le recours à l'électronique numérique permet d'utiliser une interface de commande électro-hydraulique, telle qu'une électrovalve rapide, pilotée en "tout ou rien", d'une structure simple, fiable, peu sensible à la pollution et peu coûteuse, contrairement aux servo-valves utilisées dans le cadre des chaînes de régulation analogiques qui sont certes performantes, mais d'une mise en oeuvre délicate.

Enfin, une chaîne de régulation numérique selon l'invention permet, par elle-même, de réaliser facilement et sans coût supplémentaire, les tests s'avérant nécessaires pour vérifier le bon état de fonctionnement de l'installation de freinage.

Pour ces raisons, l'installation de freinage selon l'invention présente de nombreux avantages décisifs vis-à-vis des installations de l'art antérieur.

18

R E V E N D I C A T I O N S

1/ Installation de régulation de freinage pour véhicules, notamment pour aérodyne, comportant des moyens délivrant des signaux représentatifs de la vitesse réelle du véhicule, un capteur (1,2) délivrant des signaux représentatifs de la vitesse d'une roue freinée (3,4), un calculateur (10) électronique élaborant un signal représentatif d'une vitesse de consigne, obtenue à partir d'un glissement de consigne en prenant en compte la vitesse réelle du véhicule, et sur laquelle la vitesse de la roue freinée (3,4) est asservie, le calculateur (10) assurant la comparaison des signaux de vitesse de la roue freinée (3,4) et de la vitesse de consigne pour élaborer un ordre de pilotage d'un organe de commande de freinage, susceptible d'actionner les freins (5) du véhicule proportionnellement au couple de freinage, caractérisée en ce que le capteur (1,2) délivrant des signaux représentatifs de la vitesse d'une roue freinée (3,4) est un générateur d'impulsions, lesquelles sont transmises au calculateur (10), de type numérique, mesurant la vitesse de la roue freinée (3,4) par comptages relatifs du nombre d'impulsions et du nombre d'unités de temps déterminées par une horloge (11), et pilotant l'organe de commande de freinage en "tout ou rien", selon une fonction de transfert directe telle que la position de repos de l'organe de commande est de ne pas envoyer d'ordre de défreinage lorsque la vitesse de la roue freinée (4) est supérieure à la vitesse de consigne, et que la position active de l'organe de commande est d'envoyer un ordre de défreinage lorsque la vitesse de la roue freinée (4) est inférieure à la vitesse de consigne.

2/ Installation selon la revendication 1, caractérisée en ce que le calculateur (10) prend en compte la vitesse par comptage du nombre d'impulsions par unité de temps.

3/ Installation selon la revendication 1, caractérisée en ce que le calculateur (10) prend en compte la vitesse par comptage du nombre d'unités de temps entre deux impulsions, l'unité de temps étant choisie suffisamment courte pour qu'à la vitesse de rotation maximale des roues (3,4) il y ait toujours plusieurs unités de temps entre deux impulsions.

4/ Installation selon l'une des revendications 1 à 3, caractérisée en ce que l'organe de commande de freinage est piloté par une suite de cycles se succédant à une cadence prédéterminée, et en ce qu'à chaque début de cycle un ordre de défreinage est créé, dont la durée est nulle si un défreinage n'est pas nécessaire, et dont la durée est celle d'un cycle si un défreinage total est nécessaire.

5/ Installation selon la revendication 4, caractérisée en ce que chaque cycle est partagé en plusieurs parties égales, et en ce que la durée de l'ordre de défreinage, créée au début de chaque cycle, est celle d'une fraction de cycle, correspondant à un nombre entier, déterminée par le calculateur (10), de parties de cycle, si un défreinage partiel est nécessaire.

6/ Installation selon l'une des revendications 1 à 5, caractérisée en ce que l'anticipation du pilotage de l'organe de commande de freinage, compensant les retards de réponse de ce dernier et des freins (5) notamment est réalisée en ajoutant à la fonction de transfert directe une fonction pondérée proportionnelle à l'accélération de la roue freinée (4), ainsi, éventuellement, qu'une fonction pondérée proportionnelle à la dérivée seconde de la vitesse de la roue freinée (4) en fonction du temps.

7/ Installation selon la revendication 6, caractérisée en ce que l'on ajoute également à la fonction directe une fonction pondérée limitant le nombre de cycles successifs se déroulant sans ordre de défreinage, compte tenu des ordres antérieurs.

8/ Installation selon l'une des revendications 1 à 7, caractérisée en ce que l'organe de commande de freinage est une électrovalve (6) rapide délivrant aux freins (5), à commande hydraulique, une pression d'actionnement, proportionnelle au couple de freinage, et commandée en "tout ou rien" par l'électrovalve rapide, elle-même pilotée électriquement en "tout ou rien".

FIG . 1

FIG . 2

FIG . 3

**Office européen des brevets**

**RAPPORT DE RECHERCHE EUROPEENNE**

Numéro de la demande

EP 80 40 1459

| Catégorie | Citation du document avec indication, en cas de besoin, des parties pertinentes | Revendication concernée |
|---|---|---|
| | **DOCUMENTS CONSIDERES COMME PERTINENTS** | |
| X | <u>US - A - 3 915 508</u> (GROSSEAU)<br>* colonne 1, ligne 64 à colonne 2, ligne 65; colonne 3, ligne 27 à colonne 5, ligne 8; figures 1 et 4 *<br><br>-- | 1,2,4, 5 |
| | <u>FR - A - 2 372 058</u> (MESSIER-HISPANO)<br>* page 4, lignes 34 à 39; page 5, ligne 33 à page 6, ligne 16; page 11, ligne 17 à page 12, ligne 5; figures 13 à 16 *<br><br>-- | 1 |
| | <u>US - A - 3 838 892</u> (DAVIS et al.)<br>* colonne 1, ligne 69 à colonne 2, ligne 12; colonne 6, lignes 1 à 4; colonne 7, lignes 3 à 7 et ligne 14 à colonne 9, ligne 25; colonne 9, lignes 61 à 65; figure 1 *<br>& FR - A - 2 204 522<br>& FR - A - 2 204 523<br><br>-- | 1,4,6, 8 |
| | <u>DE - A - 2 328 229</u> (CITROEN)<br>* page 7, ligne 1 à page 9, ligne 1; figures 1,3 et 4 *<br>& FR - A - 2 201 995<br><br>-- | 1,4 |
| | <u>DE - A - 2 419 761</u> (ROCKWELL INTERNATIONAL)<br>* page 6, dernier alinéa à page 11, ligne 15; page 12, ligne 7 à page 13, ligne 9; figures 1 et 4 *<br>./.. | 1,6,8 |

**CLASSEMENT DE LA DEMANDE (Int. Cl. 3)**

B 64 C 25/46
B 60 T 8/02

**DOMAINES TECHNIQUES RECHERCHES (Int. Cl. 3)**

B 60 T 8/00
8/02
8/04
8/06
8/08
8/10
8/12
B 64 C 25/46

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 23.01.1981 | VERLEYE |

OEB Form 1503.1   06.78

**RAPPORT DE RECHERCHE EUROPEENNE**

Office européen
des brevets

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| | & FR - A - 2 227 158 | | |
| | FR - A - 2 143 293 (PHILCO-FORD) | 1,4,8 | |
| | * page 9, lignes 8 à 23 et ligne 35 à page 10, ligne 4; page 16, ligne 11 à page 17, ligne 17 et ligne 34 à page 18, ligne 19; figures 3 et 8 * | | |
| | US - A - 4 050 747 (RUHNEAU et al.) | 3 | |
| | * colonne 2, ligne 3 à colonne 3, ligne 8 et lignes 57 à 66; figures 1 et 1A * | | DOMAINES TECHNIQUES RECHERCHES (Int. Cl. ³) |
| D | FR - A - 1 407 168 (HISPANO-SUIZA) | 1 | |
| D | FR - E - 86 491 (HISPANO-SUIZA) | 1 | |
| D | FR - A - 1 378 958 (HISPANO-SUIZA) | 1 | |

OEB Form 1503.2   06.78